# EUROPÄISCHE PATENTANMELDUNG

(11) **EP 4 640 118 A1**
(43) Veröffentlichungstag der Anmeldung: **29.10.2025**
(21) Anmeldenummer: 25165300.2
(22) Anmeldetag: 21.03.2025
(51) Int. Cl.: A47J 31/52, G07C 9/00

(54) **VERFAHREN UND STEUEREINHEIT ZUM BETREIBEN EINES GETRÄNKEAUTOMATEN UND GETRÄNKEAUTOMAT**

(30) Priorität: 23.04.2024 DE 102024111335
(71) Anmelder: Miele & Cie. KG, 33332 Gütersloh (DE)
(72) Erfinder: Höcker, Jan, 49152 Bad Essen (DE); Janson, Thomas, 33332 Gütersloh (DE); Kohnert, Lars, 33659 Bielefeld (DE); Tembaak, Jutta, 49492 Westerkappeln (DE)

(57) **Zusammenfassung**

Die Erfindung betrifft ein Verfahren zum Betreiben eines Getränkeautomaten (100), wobei das Verfahren einen Schritt des Erkennens einer Anwesenheit eines Nutzers vor dem Getränkeautomaten (100) und einen Schritt des Aktivierens einer Uploadsperre, ansprechend auf das Erkennen einer Anwesenheit des Nutzers, wobei die Uploadsperre ausgebildet ist, um ein Aufnehmen eines von einer Bildaufnahmeeinrichtung (165) erfassten Bildes (182) eines Auslaufbereichs (150) des Getränkeautomaten (100) und/oder ein Hochladen eines solchen Bildes (182) in eine zentrale Rechnereinheit (185) zu unterdrücken.

## Beschreibung

Die Erfindung betrifft ein Verfahren und eine Steuereinheit zum Betreiben eines Getränkeautomaten und einen Getränkeautomaten gemäß den Hauptansprüchen.

In einem Kaffeevollautomat als Getränkeautomat ist oftmals eine Kamera als Bildaufnahmeeinrichtung verbaut, die für die Schätzung von Gefäßeigenschaften wie Höhe und Volumen vorgesehen ist, wobei eine solche Schätzung durch eine Bildverarbeitung lokal auf dem Gerät ermittelt werden kann. Hierbei wird gezielt die Abstellfläche und dabei unweigerlich einen Teil des Raums vor dem Gerät bzw. der Kamera zusätzlich erfasst, da die Abstellfläche bzw. der Ausgabebereich kein abgeschlossener Raum wie etwa ein Innenraum eines Geschirrspülers ist. Es kann nicht ausgeschlossen werden, dass z. B. Gesichter von Personen zu sehen sind, etwa bei der Reinigung des Geräts oder wenn eine kleinere Person wie ein Kind sich vor dem Gefäß befindet. Aus der DE 10 2016 107 086 A1 ist ein Getränkeautomat mit einer Kamera zur Erfassung des Trinkbehälters und zur Überwachung des Füllstandes bekannt.

Für Entwicklungszwecke ist es von großem Interesse, dass die Kamerabilder in einer Cloud, beispielsweise des Herstellers des Getränkeautomaten zur Verfügung stehen, um die Erkennungsalgorithmen weiter anzupassen und auch um z. B. die von den Kunden typischerweise verwendeten Gefäße zu katalogisieren und so das Gerät besser auf die Kunden abstimmen zu können. Personen oder Personenteile sind für die Entwicklung nur von geringem Interesse und Wert.

Der Verwendung von Kundendaten zu Entwicklungszwecken müssen die Kunden zustimmen. Die Zustimmung der Kunden kann deutlich erleichtert werden, wenn diesen zugesichert werden kann, dass in den auf den Server hochgeladenen Kameraaufnahmen keine Personen zu sehen sind.

Typischerweise wird das Hochladen bzw. Aufnehmen von Kamerabildern entweder physisch verhindert indem der Kunde etwa ein Shutter vor der Kamerablende platziert (wie etwa bei Laptops üblich). Alternativ werden die Bilder mithilfe spezieller Algorithmen auf Personenmerkmale gefiltert und diese entsprechend vor dem Upload aussortiert.

Der hier vorgestellte Ansatz stellt sich die Aufgabe, ein verbessertes Verfahren und eine verbesserte Steuereinheit zum Betreiben eines Getränkeautomaten und einen verbesserten Getränkeautomaten zu schaffen.

Erfindungsgemäß wird diese Aufgabe durch ein Verfahren und eine Steuereinheit zum Betreiben eines Getränkeautomaten sowie einen Getränkeautomaten mit den Merkmalen bzw. Schritte der Hauptansprüche gelöst. Vorteilhafte Ausgestaltungen und Weiterbildungen der Erfindung ergeben sich aus den nachfolgenden Unteransprüchen.

Der hier vorgestellte Ansatz schafft ein Verfahren zum Betreiben eines Getränkeautomaten, wobei das Verfahren folgende Schritte umfasst:
Erkennen einer Anwesenheit eines Nutzers vor dem Getränkeautomaten; und
Aktivieren einer Uploadsperre, ansprechend auf das Erkennen einer Anwesenheit des Nutzers, wobei die Uploadsperre ausgebildet ist, um ein Aufnehmen eines von einer Bildaufnahmeeinrichtung erfassten Bildes eines Auslaufbereichs des Getränkeautomaten und/oder ein Hochladen eines solchen Bildes in eine zentrale Rechnereinheit zu unterdrücken.

Unter einem Getränkeautomaten kann vorliegend beispielsweise ein Kaffeevollautomat verstanden werden. Unter einer Uploadsperre kann beispielsweise eine Information oder ein Signal verstanden werden, welches signalisiert, dass ein Bild oder eine Information den Getränkeautomaten nicht verlassen darf oder soll oder nicht zu der zentralen Rechnereinheit übermittelt werden soll. Unter einer zentralen Rechnereinheit kann beispielsweise ein Cloudserver oder allgemein eine Rechnereinheit verstanden werden, die von dem Getränkeautomaten entfernt, speziell in einem anderen Gebäude als der Getränkeautomat angeordnet ist. Unter einer Bildaufnahmeeinrichtung kann beispielsweise eine Kamera verstanden werden, die ein Bild des Auslaufbereichs des Getränkeautomaten aufnimmt, wobei dieses Bild vom Getränkeautomaten ausgewertet werden kann, um beispielsweise eine Tasse, deren Höhe, deren Volumen oder dergleichen zu erfassen und diese Information für die Getränkeausgabe zu verwenden.

Der hier vorgestellte Ansatz basiert auf der Erkenntnis, dass durch die Erkennung der Anwesenheit des Nutzers vor dem Getränkeautomaten eine technisch sehr einfache Möglichkeit besteht, dem Bild eine Zusatzinformation zuzuordnen, dass dieses Bild nicht an die zentrale Rechnereinheit ausgesandt werden soll oder darf. Auf diese Weise kann vorteilhaft vermieden werden, dass eine schaltungstechnisch oder numerisch aufwendige Auswertung des Bildes, beispielsweise hinsichtlich von biometrischen Informationen, erfolgen muss, um die Anwesenheit des Nutzers vor dem Getränkeautomaten festzustellen.

Gemäß einer günstigen Ausführungsform kann in dem Schritt des Erkennens der Nutzer erkannt werden, wenn er sich in einem Abstand von bis zu zwei Metern vor dem Getränkeautomaten befindet. Ein Nutzer wird als nicht erkannt interpretiert, wenn er sich in einem Abstand von mehr als zwei Metern vor dem Getränkeautomaten befindet. Eine solche Ausführungsform bietet den Vorteil, dass in dem Abstand von bis zu zwei Metern vor dem Getränkeautomaten eine Erkennung des Nutzers sehr zuverlässig funktioniert und weiterhin die Bildinformationen in einem derartigen Abstandsbereich besonders eindeutig den Nutzer identifizieren lassen.

Gemäß einer weiteren Ausführungsform des hier vorgestellten Ansatzes wird im Schritt des Erkennens die Anwesenheit des Nutzers unter Verwendung von Informationen eines anderen Sensors als der Bildaufnahmeeinrichtung erkannt, insbesondere wobei die Informationen von einem Abstandssensor eingelesen wird, der ausgebildet ist, um einen Frontbereich vor dem Getränkeautomaten zu überwachen. Beispielsweise kann ein solcher anderer Sensor bzw. Abstandssensor als ein ToF- (ToF = Time-of-Flight- Laufzeitsensor) oder Radarsensor oder Bluetooth- oder UWB-Chip (UWB =Ultra Wide Band = Ultrabreitband) ausgebildet sein. Eine derartige Ausführungsform des hier vorgeschlagenen Ansatzes bietet den Vorteil, dass durch die Verwendung des anderen Sensors bzw. Abstandssensors die Möglichkeit besteht, kostengünstig eine redundante Information über die Anwesenheit des Nutzers zu erhalten. Ferner kann die Kamera selbst zur Erfassung der Abstandsinformation verwendet werden. Zusätzlich besteht die Möglichkeit, einen anderen Erfassungsbereich als die Bildaufnahmeeinrichtung zu überwachen und hierdurch eine präzisere Erkennung der Anwesenheit des Nutzers vornehmen zu können.

Besonders günstig ist eine Ausführungsform des hier vorgeschlagenen Ansatzes, bei der ein Schritt des Aufnehmens von zumindest dem Bild des Auslaufbereichs des Getränkeautomaten durch die Bildaufnahmeeinrichtung und/oder des Sendens eines solchen Bildes an die zentrale Rechnereinheit vorgesehen ist, ansprechend auf ein Erkennen einer Abwesenheit des Nutzers vor dem Getränkeautomaten. Eine solche Ausführungsform bietet den Vorteil, dass nun das Bild zur zentralen Rechnereinheit gesendet und dort verarbeitet werden kann, ohne hierfür sensible Nutzerinformationen preisgeben zu müssen.

Denkbar ist weiterhin eine Ausführungsform des hier vorgeschlagenen Ansatzes, bei der der Schritt des Sendens abgebrochen wird, wenn eine Anwesenheit des Nutzers vor dem Getränkeautomaten erkannt wird. Eine solche Ausführungsform des hier vorgeschlagenen Ansatzes bietet den Vorteil, dass zeitnah auf eine nun vorliegende Anwesenheit des Nutzers zum Getränkeautomaten reagiert werden kann und hierdurch sensible Nutzerinformationen besonders gut geschützt werden können.

Von Vorteil ist weiterhin eine Ausführungsform des hier vorgeschlagenen Ansatzes, bei der der Schritt des Sendens in Abhängigkeit von einer Zustimmungsinformation ausgeführt wird, wobei die Zustimmungsinformation eine Zustimmung eines Nutzers des Getränkeautomaten zu einem Versenden des Bildes an die zentrale Rechnereinheit repräsentiert. Unter einer Zustimmungsinformation kann eine Information verstanden werden, die vom Nutzer zu einem vorangegangenen Zeitpunkt abgefragt wurde und die ein prinzipielles Einverständnis des Nutzers zum Hochladen von Bildern auf die zentrale Rechnereinheit beziehungsweise den Cloudserver repräsentiert.

Auch können gemäß einer weiteren Ausführungsform des hier vorgeschlagenen Ansatzes die Schritte des Verfahrens wiederholt ausgeführt werden. Eine solche Ausführungsform bietet den Vorteil, durch die beispielsweise zyklische Wiederholung der Ausführung der Schritte eine deutlich größere Menge an Bildern bereitstellen zu können, die in der zentralen Rechnereinheit ausgewertet werden können. Auf diese Weise kann ein besonders gutes Training der Bildauswertung unter Verwendung der Bilder des Auslaufbereichs eines Getränkeautomaten vorgenommen werden.

Der hier vorgestellte Ansatz schafft ferner eine Steuereinheit, die ausgebildet ist, um die Schritte einer Variante eines hier vorgestellten Verfahrens in entsprechenden Einrichtungen durchzuführen, anzusteuern bzw. umzusetzen. Auch durch diese Ausführungsvariante der Erfindung in Form einer Vorrichtung kann die der Erfindung zugrunde liegende Aufgabe schnell und effizient gelöst werden.

Die Steuereinheit kann ausgebildet sein, um Eingangssignale einzulesen und unter Verwendung der Eingangssignale Ausgangssignale zu bestimmen und bereitzustellen. Ein Eingangssignal kann beispielsweise ein über eine Eingangsschnittstelle der Steuereinheit einlesbares Sensorsignal darstellen. Ein Ausgangssignal kann ein Steuersignal oder ein Datensignal darstellen, das an einer Ausgangsschnittstelle der Steuereinheit bereitgestellt werden kann. Die Steuereinheit kann ausgebildet sein, um die Ausgangssignale unter Verwendung einer in Hardware oder Software umgesetzten Verarbeitungsvorschrift zu bestimmen. Beispielsweise kann die Steuereinheit dazu eine Logikschaltung, einen integrierten Schaltkreis oder ein Softwaremodul umfassen und beispielsweise als ein diskretes Bauelement realisiert sein oder von einem diskreten Bauelement umfasst sein.

Gemäß einer weiteren Ausführungsform wird ein Getränkeautomat mit einer Bildaufnahmeeinrichtung zum Erfassen eines Bildes eines Auslaufbereichs des Getränkeautomaten, einer Erfassungsvorrichtung zum Erfassen des vor dem Getränkeautomaten befindlichen Nutzers und einer Variante einer hier vorgeschlagenen Steuereinheit vorgestellt. Auch durch eine solche Ausführungsform lassen sich die vorstehend genannten Vorteile schnell und effizient realisieren.

Eine Ausführung der Erfindung betrifft ferner ein Computer-Programmprodukt oder Computerprogramm mit Programmcode, der auf einem maschinenlesbaren Träger oder Speichermedium wie einem Halbleiterspeicher, einem Festplattenspeicher oder einem optischen Speicher gespeichert sein kann. Wird das Programmprodukt oder Programm auf einem Computer oder einer Steuereinheit ausgeführt, so kann das Programmprodukt oder Programm zur Durchführung, Umsetzung und/oder Ansteuerung der Schritte des Verfahrens nach einer der hier beschriebenen Ausführungsformen verwendet werden.

Auch wenn der beschriebene Ansatz anhand eines Haushaltgeräts beschrieben wird, kann der hier beschriebene Ansatz entsprechend im Zusammenhang mit einem gewerblichen oder professionellen Gerät, beispielsweise einem Gastronomiegerät, eingesetzt werden.

Ein Ausführungsbeispiel der Erfindung ist in den Zeichnungen rein schematisch dargestellt und wird nachfolgend näher beschrieben. Es zeigt
- Figur 1: eine schematische Darstellung eines Ausführungsbeispiels eines Getränkeautomaten;
- Figur 2: eine Seitenansicht eines Getränkeautomaten in einem Szenario, in dem sich ein Nutzer und Getränkeautomaten befindet;
- Figur 3: eine Aufsichtsdarstellung auf das in Figur 2 wiedergegebene Szenario; und
- Figur 4: ein Ablaufdiagramm eines Ausführungsbeispiels eines Verfahrens zum Betreiben eines Getränkeautomaten.

Gleiche oder ähnliche Elemente werden in den Figuren mit gleichen oder ähnlichen Bezugszeichen versehen, wobei auf eine wiederholte Beschreibung aus Gründen der Übersichtlichkeit verzichtet wurde.

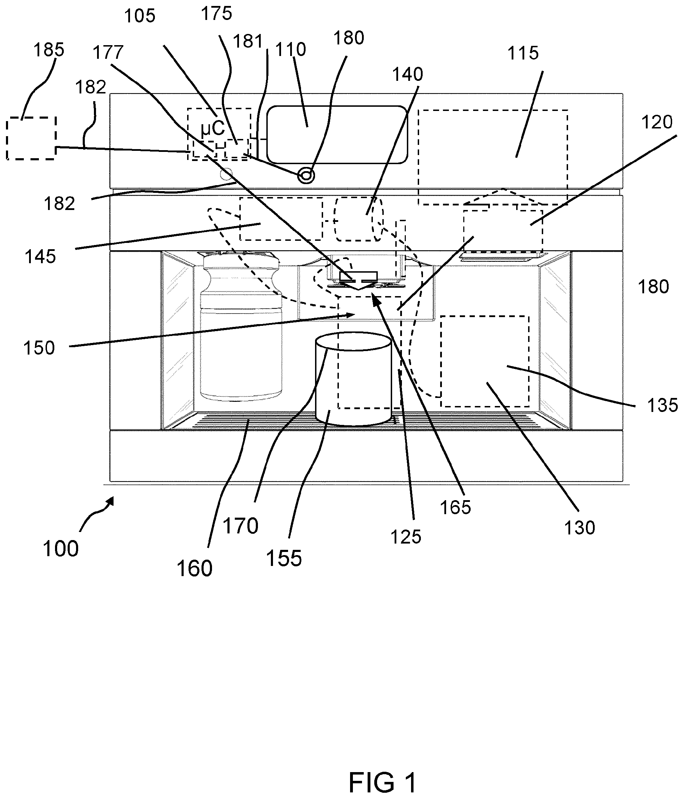

Figur 1 zeigt eine schematische Darstellung eines Ausführungsbeispiels eines Getränkeautomaten 100. Der Getränkeautomat 100 umfasst hierbei eine Steuervorrichtung bzw. eine Steuereinheit 105, um die Funktionen bzw. Komponenten des in der Figur 1 dargestellten Getränkeautomaten 100 anzusteuern, was jedoch aus Gründen der Übersichtlichkeit nicht näher dargestellt ist. Um eine solche Ansteuerung der Komponenten des Getränkeautomaten 100 vorzunehmen, kann das Steuergerät bzw. die Steuereinheit 105 entsprechende Eingaben von einem Nutzer des Getränkeautomaten 100 über eine Bedien- und/oder Anzeigeeinheit 110 erhalten oder einlesen.

Der Getränkeautomat 100 kann gemäß dem in Figur 1 dargestellten Ausführungsbeispiel als eine Kaffeemaschine ausgestaltet sein. Hierzu umfasst der Getränkeautomat 100 einem Bohnenbehälter 115, in welchem beispielsweise Kaffeebohnen bevorratet werden. Aus dem Bohnenbehälter 115 werden die in der Figur 1 nicht dargestellten Kaffeebohnen beispielsweise in ein Mahlwerk 120 transportiert, in welchem aus den Kaffeebohnen gemahlenes Kaffeepulver erzeugt wird, welches dann beispielsweise in eine Brüheinheit 125 weitergeführt bzw. transportiert wird.

Außerdem umfasst der Getränkeautomat 100 einen Wassertank 130, aus welchem Wasser 135 mittels einer Pumpe 140 in einen Heizblock 145 gefördert wird, in welchem das Wasser nun entsprechend erhitzt und der Brüheinheit 125 zugeführt wird. In der Brüheinheit 125 wird dann mit dem erhitzten Wasser das aus dem Mahlwerk 120 erhaltene Kaffeepulver zu einem Kaffee aufgebrüht und über den Auslauf bzw. Auslass oder Getränkeauslauf in den Auslaufbereich 150 in ein Getränkegefäß 155 ausgegeben, welches auf einer Abstellplatte bzw. Abstellfläche 160 gemäß einem Ausführungsbeispiel des hier vorgestellten Ansatzes abgestellt ist. Mit der Kamera bzw. einer Bildaufnahmeeinrichtung 165 des Getränkeautomaten 100 kann ein oberer Rand 170 oder ein Rand eines Flüssigkeitspegels eines Getränkes in dem Getränkegefäß 155 sehr einfach anhand dessen bogen- und/oder kreisförmigen Gestalt identifiziert werden, um aus dieser Information beispielsweise ein Volumen oder einen aktuellen Füllstand des Getränkegefäßes 155 zu ermitteln. Ferner können mit der Kamera 165 anhand der erfassten Bilder weitere Informationen abgeleitet werden, beispielsweise Position des Gefäßes 155 oder die Aktivität des Befüllens.

Um nun den hier vorgeschlagenen Ansatz realisieren zu können, umfasst die Steuereinheit 105 weiterhin eine Erkennungseinheit 175 und eine Aktivierungseinheit 177. Die Erkennungseinheit 175 ist mit einem Sensor 180 verbunden, der beispielsweise ausgebildet ist, um allgemein eine Person oder einen Nutzer des Getränkeautomaten 100 zu erfassen, oder speziell um einen Abstand dieser Person bzw. des Nutzers vom Getränkeautomaten 100 zu bestimmen und ein entsprechendes Sensorsignal 181 an die Erkennungseinheit 175 auszugeben. Die Aktivierungseinheit 177 ist ausgebildet, um ansprechend auf eine erkannte Anwesenheit des Nutzers ein Bild 182 des Auslaufbereichs 150 mit einer Uploadsperre zu belegen. Hierdurch kann sichergestellt werden, dass bei einer Anwesenheit einer Person bzw. des Nutzers im Bereich des Getränkeautomaten 100 keinen von der Bildaufnahmeeinrichtung 165 aufgenommenes Bild 182 an eine zentrale Rechnereinheit wie beispielsweise einen Cloudserver 185 übertragen wird. Hierdurch kann sichergestellt werden, dass sensible Nutzerinformationen, die sich beispielsweise in dem Bild 182 befinden, wenn der Nutzer sich in der Nähe des Getränkeautomaten 100 befindet, nicht an die zentrale Rechnereinheit 185 übertragen werden. Wird jedoch in der Erkennungseinheit 175 die Abwesenheit eines Nutzers im Bereich oder der Umgebung des Getränkeautomaten 100 erkannt oder allgemein kein Nutzer in diesem Bereich erkannt, kann beispielsweise eine entsprechende Freigabe der Übertragung des Bildes 182 zu der zentralen Rechnereinheit 185 gegeben werden. Hierdurch lassen sich in der zentralen Rechnereinheit 185, die sich beispielsweise in einem Betriebsgebäude des Herstellers des Getränkeautomaten 100 befindet, entsprechende Bilder 182 des Auslaufbereichs 150 gesammelt werden, die nachfolgend für ein Training der Steuervorrichtung 105 von Gefäßparametern von Gefäßen 155 verwendet werden können, die im Auslaufbereich 150 platziert werden.

Denkbar ist auch, dass die Übertragung des Bildes 182 an die zentrale Rechnereinheit 185 lediglich dann erfolgt, wenn ein Nutzer, beispielsweise über die Anzeige- oder Bedieneinheit 110 eine entsprechende Zustimmungsinformation eingegeben hat, die eine Zustimmung des Nutzers für die Versendung des Bildes 182 an die zentrale Rechnereinheit 185 repräsentiert.

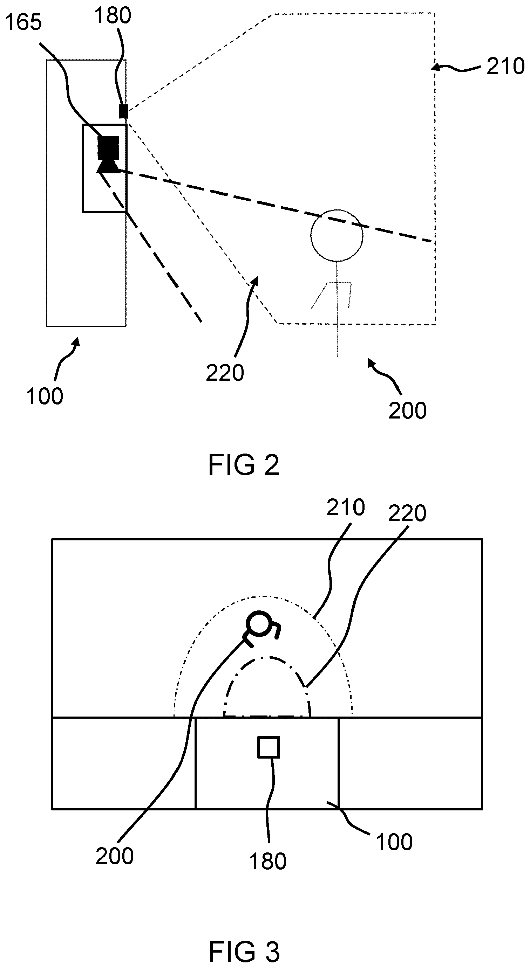

Figur 2 zeigt eine Seitenansicht eines Getränkeautomaten 100 in einem Szenario, in dem sich ein Nutzer 200 und Getränkeautomaten 100 befindet. Zu erkennen ist wiederum die Bildaufnahmeeinrichtung 165 sowie der Sensor 180. Der Sensor 180, der beispielsweise als ein Radar-, Laufzeit-, UWB- oder Bluetooth- Abstandssensor ausgebildet ist, welcher beispielsweise dazu ausgebildet ist, in einem Sensorerfassungsbereich 210 die Anwesenheit des Nutzers 200 vor dem Getränkebereiter und damit im Erfassungsbereich der Kamera 165 zu erkennen. Die Bildaufnahmeeinrichtung 165 ist hierbei ausgebildet, um in einem Bild Aufnahmebereich 220 entsprechende Gegenstände wie beispielsweise das in der Figur 2 nicht dargestellte, jedoch in der Figur 1 dargestellte Gefäß 155 zu erkennen oder abzubilden. Hierbei können sich der Aufnahmebereich 220 und der Sensorerfassungsbereich 210 überlappen, sodass beispielsweise der Nutzer 200, wenn er sich auf den Getränkeautomaten 100 zubewegt, in den Aufnahmebereich 220 gelangt, sodass beispielsweise sensible Nutzerinformationen wie zum Beispiel dessen Aussehen oder Gesichtszüge in einem Bild 182 der Bildaufnahmeeinrichtung 165 enthalten sind. Oftmals möchten Nutzer 200 diese sensiblen Nutzerinformationen nicht an externe Stellen wie beispielsweise die zentrale Rechnereinheit weiterleiten, sodass durch ein Erkennen des Nutzers 200 in dem Sensorerfassungsbereich 210 durch den Sensor 180 und der Ausgabe eines entsprechenden Sensorsignals 181 in der Figur 1 dargestellten Steuereinheit 105 die entsprechende Uploadsperre gesetzt werden kann.

Figur 3 zeigt eine Aufsichtsdarstellung auf das in Figur 2 wiedergegebene Szenario. Hierbei ist erkennbar, dass sich der Nutzer 200 in dem Sensorerfassungsbereich 210 vor dem Getränkeautomaten 100 befindet und somit von dem Sensor 180 erkannt werden kann. Dies ermöglicht, die entsprechende Uploadsperre frühzeitig zusetzen, bevor sich beispielsweise der Nutzer 200 in den Aufnahmebereich 220 bewegt und somit beispielsweise zumindest teilweise in einem Bild 182 der in der Figur 2 dargestellten Bildaufnahmeeinrichtung 165 abgebildet wird.

Ferner ist anzumerken, dass ein Anwendungsgebiet von Kl-Algorithmen die Erkennung von biometrischen Merkmalen wie Gesichtern ist. Diese sollen auf das Kamerasystem angepasst werden und erfordern einen hohen Speicherverbrauch und Rechenleistungen, die gegebenenfalls nicht in jedem Haushaltsgerät wie beispielsweise dem hier beschriebenen Getränkeautomaten zur Verfügung steht. Daher werden die Bilddaten häufig an die Cloud geschickt und dort erst verarbeitet, was jedoch in Bezug auf persönliche Informationen für einige Nutzer problematisch ist.

Die Filterung der Bilder nach Personenmerkmalen ist ressourcenintensiv und kann in der Regel nicht mit der auf Haushaltsgeräten zur Verfügung stehenden Ressourcen geleistet werden. Entsprechend werden oftmals Bilder direkt in die Cloud hochgeladen. Dieses kann eine Hemmschwelle für die Zustimmung des Kunden oder Nutzers des Getränkeautomaten zum Hochladen darstellen, auch wenn die Bilder speziell geschützt werden.

Der Verwendung von Kameraaufnahmen im Umfeld der Nutzers zu Entwicklungszwecken sollte aus Datenschutzgründen der Kunde zustimmen. Dabei ist das Bild des Nutzers für die Entwicklung der vollautomatischen Kaffeezubereitung von keinem unmittelbaren Interesse. Deutlich wichtiger ist es möglichst viele Nutzer dazu zu bewegen, Kamerabilder der weiteren Entwicklung zur Verfügung zu stellen. Daher sollte die Zustimmungsschwelle möglichst klein gehalten werden. Eine Möglichkeit ist es, dass dem Nutzer versichert wird, dass keine Aufnahmen von Personen aus seinem Haushalt in die Cloud hochgeladen werden. Dies sollte durch geeignete Maßnahmen kosten- und ressourceneffizient auf dem Gerät oder dem Getränkeautomaten sichergestellt werden. Diese Maßnahme können einen teilweise vorhandenen Präsenzdetektor umfassen, welcher eine Person vor dem Gerät sicher erkennt.

Potenzielle biometrische Informationen in Bilddaten können mit dem hier vorgeschlagenen Ansatz auf dem Gerät, speziell in dem Getränkeautomaten erkannt werden, ohne hierfür explizit Bildverarbeitung auf dem Gerät durchführen zu müssen. Hierzu kann durch den Sensor die Anwesenheit des Nutzers vor dem Getränkeautomaten erkannt werden. Im Falle der Erkennung des Nutzers vor dem Getränkeautomaten wird die Bildübertragung an die Cloud durch das Setzen einer entsprechenden Uploadsperre unterbunden, um die Privatsphäre des Nutzers sicherzustellen. Konkret bedeutet dies beispielsweise, dass Personenmerkmale nicht aufwendig in Bildern gesucht werden müssen oder dem Kunden kommuniziert werden kann, dass Bildmaterial mit Personen nicht in eine Cloud hochgeladen wird. Damit kann die Hemmschwelle gesenkt werden, Daten für die Entwicklung bei einem Hersteller des Getränkeautomaten freizugeben. Da zukünftig zu erwarten ist, dass ein Präsenzsensor in dem Getränkeautomaten vorgesehen sein wird, kann dieser kostengünstig mitgenutzt werden und braucht nicht extra für die hier beschriebene Funktionalität verbaut oder vorgesehen werden.

Insofern wird mit dem hier vorgestellten Ansatz beispielsweise ein Kaffeevollautomat (CM) mit Privatsphären-Modus durch Präsenzerkennung vorgeschlagen, wobei hier ein Präsenzsensor (wie z. B. ein ToF- oder Radarsensor oder Bluetooth- oder UWB-Chip) eingesetzt werden kann.

Im zweckmäßigen Gebrauch eines beispielhaften Kaffeeautomaten ist der Raum vor dem Gerät günstiger weise frei, d. h. ein Nutzer kann sich davor aufhalten, um Getränke zu beziehen oder das Gerät für eine Wartung zu öffnen. Das Gerät ist in einer typischen Höhe einer Arbeitsfläche aufgestellt oder entsprechend als Einbaugerät verbaut. Der Präsenzsensor ist so verbaut, dass dieser den Raum vor dem Gerät abtastet und Personen, die sich im Sensorblickfeld aufhalten, sicher detektieren kann. Der Kunde oder Nutzer wird bei der Erstinbetriebnahme beispielsweise gefragt, ob er die Bilder des Tassenrandsensors für die Entwicklung bei dem Hersteller des Getränkeautomaten zur Verfügung stellen möchte. Er wird darauf hingewiesen, dass Bilder, bei denen eine Person sich vor dem Gerät aufhält nicht hochgeladen werden (Privatsphäremodus). Der Nutzer stimmt dann beispielsweise der Verwendung derartiger Bilder zu, was durch die durch den Nutzer eingegebene Nutzungsinformation repräsentiert ist.

Ein Ablauf der Vorgehensweise gemäß dem hier vorgestellten Ansatz kann wie folgt beschrieben werden:
Der Kunde betritt zunächst den Präsenzbereich beziehungsweise den Sensorbereich innerhalb des Kamerablickwinkels, in dem er durch den Sensor erkannt wird. Der Sensor signalisiert hierauf dem Gerät bzw. der Erkennungseinheit, dass eine "Person erkannt" wurde. Das Gerät beziehungsweise die Aktivierungseinheit sperrt alle Bilder für den Upload in die Cloud, indem die Aktivierungseinheit eine entsprechende Uploadsperre setzt. Der Kunde oder Nutzer stellt sein Gefäß unter den Auslauf und aktiviert den Bezug eines Getränkes. Verlässt der Kunde oder Nutzer beispielsweise während des Bezugs des Getränkes den Präsenzbereich oder den Erfassungsbereich, dann wird dies vom Sensor erkannt und das Signal "Person erkannt" erlischt. Das Gerät hebt die Uploadsperre auf. Ein oder mehrere Bilder werden daraufhin beispielsweise in die Cloud hochgeladen. Sobald der Kunde oder Nutzer den Präsenzbereich oder den Erfassungsbereich betritt, wird der Upload wieder gesperrt und die Bilder nach der lokalen Verarbeitung verworfen.

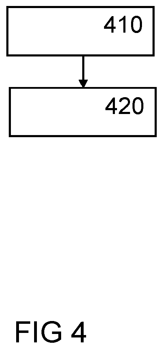

Figur 4 zeigt ein Ablaufdiagramm eines Ausführungsbeispiels eines Verfahrens 400 zum Betreiben eines Getränkeautomaten, wobei das Verfahren 400 einen Schritt 410 des Erkennens einer Anwesenheit eines Nutzers vor dem Getränkeautomaten und einen Schritt 420 des Aktivierens einer Uploadsperre umfasst, ansprechend auf das Erkennen einer Anwesenheit des Nutzers, wobei die Uploadsperre ausgebildet ist, um ein Aufnehmen eines von einer Bildaufnahmeeinrichtung erfassten Bildes eines Auslaufbereichs des Getränkeautomaten und/oder ein Hochladen eines solchen Bildes in eine zentrale Rechnereinheit zu unterdrücken.

## Patentansprüche

1. Verfahren (400) zum Betreiben eines Getränkeautomaten (100), wobei das Verfahren (400) folgende Schritte umfasst:
Erkennen (410) einer Anwesenheit eines Nutzers (200) vor dem Getränkeautomaten (100); und
Aktivieren (420) einer Uploadsperre, ansprechend auf das Erkennen einer Anwesenheit des Nutzers (200), wobei die Uploadsperre ausgebildet ist, um ein Aufnehmen eines von einer Bildaufnahmeeinrichtung (165) erfassten Bildes (182) eines Auslaufbereichs (150) des Getränkeautomaten (100) und/oder ein Hochladen eines solchen Bildes (182) in eine zentrale Rechnereinheit (185) zu unterdrücken.

2. Verfahren (400) gemäß Anspruch 1, wobei in dem Schritt (410) des Erkennens der Nutzer (200) erkannt wird, wenn er sich in einem Abstand von bis zu zwei Metern vor dem Getränkeautomaten (100) befindet und/oder wobei der Nutzer (200) nicht erkannt wird, wenn er sich in einem Abstand von mehr als zwei Metern vor dem Getränkeautomaten (100) befindet.

3. Verfahren (400) gemäß einem der vorangegangenen Ansprüche, wobei im Schritt (410) des Erkennens die Anwesenheit des Nutzers (200) unter Verwendung von Informationen eines anderen Sensors (180) als der Bildaufnahmeeinrichtung (165) erkannt wird, insbesondere wobei die Informationen von einem Abstandssensor (180) eingelesen wird, der ausgebildet ist, um einen Frontbereich vor dem Getränkeautomaten (100) zu überwachen.

4. Verfahren (400) gemäß einem der vorangegangenen Ansprüche, mit einem Schritt des Aufnehmens von zumindest dem Bild (182) des Auslaufbereichs (150) des Getränkeautomaten (100) durch die Bildaufnahmeeinrichtung (165) und/oder des Sendens eines solchen Bildes (182) an zentrale Rechnereinheit (185), ansprechend auf ein Erkennen einer Abwesenheit des Nutzers (200) vor dem Getränkeautomaten (100).

5. Verfahren (400) gemäß Anspruch 4, wobei der Schritt des Sendens abgebrochen wird, wenn eine Anwesenheit des Nutzers (200) vor dem Getränkeautomaten (100) erkannt wird.

6. Verfahren (400) gemäß Anspruch 4 oder 5, wobei der Schritt des Sendens in Abhängigkeit von einer Zustimmungsinformation ausgeführt wird, wobei die Zustimmungsinformation eine Zustimmung eines Nutzers (200) des Getränkeautomaten (100) zu einem Versenden des Bildes (182) an die zentrale Rechnereinheit (185) repräsentiert.

7. Verfahren (400) gemäß einem der vorangegangenen Ansprüche, wobei die Schritte (410, 420) des Verfahrens (400) wiederholt ausgeführt werden.

8. Steuereinheit (105), die ausgebildet ist, um die Schritte (410, 420) des Verfahrens (400) gemäß einem der vorangegangenen Ansprüche in entsprechenden Einheiten (175, 177) auszuführen und/oder anzusteuern.

9. Getränkeautomat (100) mit einer Bildaufnahmeeinrichtung (165) zum Erfassen eines Bildes (182) eines Auslaufbereichs (150) des Getränkeautomaten (100) und einer Steuereinheit (105) gemäß Anspruch 8.

10. Computer-Programmprodukt mit Programmcode zur Durchführung des Verfahrens (400) nach einem der Ansprüche 1 bis 7, wenn das Computer-Programmprodukt auf einer Steuereinheit (105) gemäß Anspruch 8 ausgeführt wird.
